# EUROPÄISCHE PATENTSCHRIFT

(11) **EP 4 341 674 B1**
(45) Veröffentlichungstag und Bekanntmachung des Hinweises auf die Patenterteilung: **20.05.2026**
(21) Anmeldenummer: 22777967.5
(22) Anmeldetag: 09.09.2022
(51) Int. Cl.: G01N 21/88, G01N 21/958, G01B 11/25

(54) **VERFAHREN UND VORRICHTUNG ZUR ERKENNUNG VON LOKALEN FEHLERN AUF EINER SPIEGELNDEN OBERFLÄCHE**
METHOD AND DEVICE FOR DETECTING LOCAL DEFECTS ON A REFLECTIVE SURFACE
PROCÉDÉ ET DISPOSITIF DE DÉTECTION DE DÉFAUTS LOCAUX SUR UNE SURFACE SPÉCULAIRE

(30) Priorität: 15.09.2021 DE 102021123880
(43) Veröffentlichungstag der Anmeldung: 27.03.2024
(73) Patentinhaber: ISRA VISION GMBH, 64293 Darmstadt (DE)
(72) Erfinder: VEIT, Klaus, 90768 Fürth (DE)
(74) Vertreter: WSL Patentanwälte Partnerschaft mbB
(86) Internationale Anmeldenummer: PCT/EP2022/075123
(87) Internationale Veröffentlichungsnummer: WO 2023/041436

(56) Entgegenhaltungen:
- DE-B3- 102018 118 602
- US-A1- 2019 287 237

## Beschreibung

Die Erfindung betrifft ein Verfahren und eine Vorrichtung zur Erkennung von lokalen Fehlern auf einer spiegelnden Oberfläche, wobei die Vorrichtung mindestens ein Muster zur Reflexion an der spiegelnden Oberfläche erzeugen kann, und mindestens eine Kamera und eine Datenverarbeitungseinheit aufweist. Die Erfindung betrifft ferner ein Computerprogrammprodukt und einen computerlesbaren Datenträger. Verfahren, bei denen ein der Form und Lage nach bekanntes Muster in einer reflektierenden Oberfläche gespiegelt wird und das Spiegelbild mit einer Kamera betrachtet und ausgewertet wird, sind zur Formmessung von spiegelnden Oberflächen bekannt. Für derartige Verfahren wird auch der Begriff Deflektometrie verwendet.

Derartige Deflektometrie-Verfahren existieren bereits in einer Vielzahl von Varianten. Bei den bekannten Verfahren wird mit einer Kamera in das Spiegelbild eines sich auf der Oberfläche spiegelnden Musters geschaut. Dieses Muster ist in irgendeiner Art codiert, entweder flächig oder zeitlich in einer Abfolge von verschiedenen Mustern, die nacheinander aufgenommen werden, so dass ein oder mehrere entsprechende Bilder entstehen. In den ein oder mehreren Bildern können diese Muster erkannt werden. Somit kann bei Verwendung einer Digitalkamera jedem Kamerapixel ein Punkt auf dem Muster oder den Mustern zugeordnet werden, auf den dieses Pixel schaut. Durch eine vorgeschaltete Kalibrierung ist dem System bekannt, wo im Raum sich Kamera und das/die Muster befinden. Mit diesen Informationen können dann verschiedene geometrische Eigenschaften der Oberfläche bestimmt werden wie Neigung, Krümmung und, je nach Aufbau des bekannten Systems, auch die Form der Oberfläche. Aus diesen Eigenschaften der Oberfläche kann dann ermittelt werden, ob die Oberfläche Fehler aufweist. Beispiele für ein derartiges Verfahren sind in den Dokumenten WO 2007/115621 A2 und US 2019/0287237 A1 dargestellt.

Aus dem Dokument DE 10 2018 118 602 B3 ist ein Verfahren zur Erkennung und Analyse von Oberflächenfehlern dreidimensionaler Objekte mit einer reflektierenden Oberfläche, insbesondere von Kraftfahrzeugkarosserien, sowie eine Vorrichtung hierfür bekannt. Bei den Verfahren werden die Oberflächenfehler anhand der Auswertung wenigstens eines, von wenigstens einer Kamera in Form einer Rastergrafik aus Pixeln aufgezeichneten, Bildes eines, von wenigstens einer ersten Beleuchtungseinrichtung auf wenigstens einen Teil der Oberfläche projizierten, Beleuchtungsmusters anhand eines zweidimensionalen Rasterkoordinatensystems identifiziert. Die Offenbarung betrifft insbesondere die Identifizierung von Oberflächenfehlern anhand zweidimensionaler Bildinformationen mit Hilfe von Bildbearbeitungsalgorithmen, beispielsweise mittels einer Aufstellung eines Funktionsgraphen für eine Gruppe von als zusammengehörig identifizierter Pixel. Aus dem Funktionsgraphen kann die erste Ableitung des gefundenen funktionalen Zusammenhangs bestimmt und Oberflächenfehler anhand von charakteristischen Änderungen und/oder einem Wegfall der ersten Ableitung eines gefundenen funktionalen Zusammenhangs identifiziert werden.

Diese Verfahren sind jedoch vergleichsweise aufwändig. Es müssen umfangreiche Algorithmen zur Decodierung der Muster und zur Rekonstruktion der so vermessenen Oberfläche gerechnet werden. Dies reduziert die Auswertegeschwindigkeit deutlich. Außerdem benötigen viele dieser Methoden mehrere Bilder, um die Codierung auflösen zu können, oder es werden großflächige, eindeutig flächencodierte Muster benötigt, die relativ aufwändig hergestellt werden müssen. Auch die Kalibrierung dieser Systeme ist aufwändig, und es werden in vielen Fällen große Planspiegel dazu benötigt. Insbesondere bei großen oder stark gekrümmten Flächen ist dies mit einem erheblichen Aufwand verbunden.

Die Aufgabe der vorliegenden Erfindung besteht somit darin, ein Verfahren anzugeben und eine Vorrichtung zu schaffen, die eine höhere Geschwindigkeit bei der Erkennung von Fehlern auf spiegelnden Oberflächen erreichen.

Die obige Aufgabe wird gelöst durch ein Verfahren mit den Merkmalen des Anspruchs 1, eine Vorrichtung mit den Merkmalen des Anspruchs 6 sowie ein Computerprogrammprodukt mit den Merkmalen des Anspruchs 11 und einen computerlesbaren Datenträger mit den Merkmalen des Anspruchs 12.

Insbesondere wird die Aufgabe durch ein Verfahren zur Erkennung von lokalen Fehlern auf einer spiegelnden Oberfläche mittels einer Vorrichtung gelöst, welche mindestens ein Muster zur Reflexion an der spiegelnden Oberfläche erzeugen kann, und mindestens eine Kamera und eine Datenverarbeitungseinheit aufweist. Das Muster weist mindestens einen, im Wesentlichen linienförmigen Hell-Dunkel-Übergang auf, wobei die Positionierung und Orientierung der Kamera bekannt sind, wobei die Kamera das auf der Oberfläche reflektierte Muster aufnimmt und Bilddaten des reflektierten Musters erzeugt, welche von der Kamera an die Datenverarbeitungseinheit übermittelt werden. Die Datenverarbeitungseinheit ermittelt lokale Fehler auf der spiegelnden Oberfläche basierend auf einer Auswertung mindestens einer Eigenschaft des mindestens einen Hell-Dunkel-Übergangs in den Bilddaten des reflektierten 2-dimensionalen Musters, wobei die mindestens eine Eigenschaft einen Kontrast in einem vorgegebenen Bereich des mindestens einen Hell-Dunkel-Übergangs in den Bilddaten umfasst. Hierbei wird keine geometrische Vermessung der Oberfläche durchgeführt, sondern es werden lediglich lokale Abweichungen von der Idealform oder lokale Fehler gefunden. Diese können großflächig oder kleinflächig sein. Vorteilhaft ist die durch das erfindungsgemäße Verfahren erzielbare hohe Inspektionsgeschwindigkeit, da die Berechnungen weniger kompliziert und somit nicht so aufwändig sind wie beim Stand der Technik.

Die spiegelnde Oberfläche ist im Rahmen dieser Erfindung nicht nur eine vollständig spiegelnde Oberfläche, sondern insbesondere auch eine teilweise transparente Oberfläche eines festen oder flüssigen Objekts, beispielsweise einer Glasscheibe. Daher ist die Erfindung insgesamt auch besonders geeignet für die Erkennung von Fehlern in der Oberfläche von Windschutzscheiben für Kraftfahrzeuge oder anderen gewölbten Scheiben. Die spiegelnde Oberfläche reflektiert elektromagnetische Strahlung aus dem sichtbaren Wellenlängenbereich zumindest teilweise, beispielsweise über einen Wellenlängenbereich von 380 nm bis 780 nm oder einen Abschnitt dieses Bereichs. Zusätzlich kann die Oberfläche auch elektromagnetische Strahlung im Bereich der Infrarotstrahlung (Wellenlänge größer als 780 nm) und/oder UV-Strahlung (Wellenlänge kleiner als 380 nm) reflektieren.

In einem Ausführungsbeispiel können die Fehler mehrerer reflektierender Oberflächen ermittelt werden, bspw. der Ober- und Unterseite einer Glasscheibe und/oder mehrerer übereinander angeordneter Glasscheiben bzw. sonstiger transparenter Objekte.

Die Kamera ist als Digitalkamera, beispielsweise als Matrix- oder Zeilenkamera, ausgebildet, deren Lage und Orientierung im Raum, insbesondere in Bezug auf die spiegelnde Oberfläche bekannt ist. Die Lage und Orientierung der Kamera können mit einer Kalibrierung ermittelt werden. Indem beispielsweise für jedes Pixel der Kamera die Blickrichtung bekannt ist, kann aus der Lage des auf diesem Pixel reflektierten Musterbereichs die entsprechende Musterposition mit guter Ortsauflösung und einfachen optischen Mitteln bestimmt werden, so dass eine schnelle und genaue lokale Zuordnung eines ermittelten Fehlers zu seiner Position auf der Oberfläche möglich wird. Die Kamera bestimmt für jedes Bild des Musters und jeden Pixel einen Helligkeitswert und/oder einen Farbwert, welche die Bilddaten darstellen, aus dem ein Bild des Musters besteht. Diese Bilddaten werden dann an die Datenverarbeitungseinheit weitergeleitet und dort analysiert.

Die Datenverarbeitungseinheit kann als Modul in die Kamera integriert sein oder eine von der Kamera separate Einheit bilden. Im zuletzt genannten Fall erfolgt die Übertragung der Bilddaten drahtgebunden oder per Funk von der Kamera an die Datenverarbeitungseinheit. Die Datenverarbeitungseinheit weist einen Prozessor auf, der ein funktionales Modul darstellt, welches Anweisungen/Befehle eines Algorithmus interpretiert und ausführt sowie eine Befehlssteuereinheit sowie eine Arithmetikeinheit und eine Logikeinheit aufweist. Der Prozessor kann mindestens einen Mikroprozessor, einen digitalen Signalprozessor (DSP), einen anwendungsspezifischen integrierten Schaltkreis (ASIC), einen Field Programmable Gate Array (FPGA - integrierte Schaltkreis der Digitaltechnik, in den eine logische Schaltung programmiert werden kann), eine diskrete Logikschaltung und jede Kombination dieser Bausteine aufweisen. Die Datenverarbeitungseinheit kann zudem ein Speichermodul, ein Eingabemodul (z.B. Tastatur oder Touchpad), ein Energieversorgungsmodul (z.B. Batterie) und ein Anzeigemodul (z.B. Display) aufweisen. Die Datenverarbeitungseinheit kann als reale Hardwareressource, beispielsweise ein Smartphone, Desktop-Computer, Server, Notebook, Cluster/Warehouse Scale Computer, Embedded System oder dergl., oder als virtualisierte Computerressource ausgebildet sein. Weiter kann die Datenverarbeitungseinheit einen Sender/Empfänger (Transceiver) für den Austausch von Daten mit der Kamera aufweisen.

Das Muster kann auf einem Schirm dargestellt und mittels eines Musterhalters in einer vorgegebenen Position oberhalb der spiegelnden Oberfläche angeordnet sein. Die Kamera betrachtet das reflektierte Bild des Musters und nimmt dieses auf. Die Kamera ist ebenfalls oberhalb der spiegelnden Oberfläche, d.h. auf der gleichen Seite der spiegelnden Oberfläche wie das Muster angeordnet. Das Muster ist so angeordnet, dass es der spiegelnden Oberfläche zugewandt ist.

Zur weiteren Erhöhung der Genauigkeit ist es in einem Ausführungsbeispiel möglich, dass das Muster auf einem Display oder mehreren Displays dargestellt wird. Hierdurch kann das Muster in seiner Gestaltung an die Gegebenheiten der spiegelnden Oberfläche (z.B. deren Ausdehnung) angepasst werden. Das Muster kann in einem Ausführungsbeispiel als Schwarz-Weiß-Muster oder als Farbmuster ausgeführt sein. Es enthält mindestens einen im Wesentlichen linienförmigen Hell-Dunkel-Übergang, welcher in dem Übergang eine kontinuierliche, je nach Betrachtungsweise helle oder dunkle Linie ausbildet. Die Linie kann vollständig gerade oder gekrümmt oder abschnittsweise gerade und/oder abschnittsweise gekrümmt ausgebildet sein. Betrachtet man den Hell-Dunkel-Übergang quer zur Linie, dann bildet dieser einen Bereich mit großer Helligkeit (heller Bereich) aus, an den sich ein Bereich geringer Helligkeit (dunkler Bereich) anschließt oder umgekehrt, wobei die Linie zwischen dem hellen und dunklen Bereich, d.h. durch den Übergang von hell nach dunkel bzw. dunkel nach hell entsteht. In einem Ausführungsbeispiel ist dieser Übergang scharf ausgebildet, d.h. der Gradient der Helligkeit über den Übergang ist vergleichsweise groß, beispielsweise ist die relative Helligkeitsänderung pro mm mindestens 60 % pro mm. Hierbei wird als Helligkeit(swert) die jeweilige Intensität des Lichts in einem vorgegebenen Wellenlängenbereich bezeichnet.

Erfindungsgemäß umfasst das Verfahren eine Eigenschaft des mindestens einen Hell-Dunkel-Übergangs in den Bilddaten in Form eines Kontrastes in einem vorgegebenen Bereich des mindestens einen Hell-Dunkel-Übergangs. In einem Ausführungsbeispiel kann das Verfahren als weitere Eigenschaften eine Form des mindestens einen Hell-Dunkel-Übergangs und/oder eine Helligkeitsänderung über eine vorgegebene Strecke über den mindestens einen Hell-Dunkel-Übergang, jeweils in den Bilddaten, umfassen. Dies beruht auf der Erkenntnis, dass durch einen Fehler auf der spiegelnden Oberfläche sich in den Bilddaten eine Abweichung in der Form der Linie des Hell-Dunkel-Übergangs und/oder im Kontrast eines Bereichs der Linie oder in der Helligkeitsänderung des Hell-Dunkel-Übergangs ergibt, der bei der Analyse der Bilddaten in der Datenverarbeitungseinheit erkannt wird. Als Kontrast wird hierbei ein Wert bezeichnet, der aus einem minimalen Helligkeitswert (Iₘᵢₙ) in dem vorgegebenen Bereich der Bilddaten und einem maximalen Helligkeitswert (Iₘₐₓ) berechnet wird. Der so ermittelte Kontrastwert wird mit einem vorgegebenen Kontrastsollwert oder Kontrastsollwertbereich verglichen, welche beispielsweise anhand der Kameraparameter festgelegt werden. Unterscheidet sich der berechnete Kontrastwert von dem Kontrastsollwert oder liegt dieser außerhalb des Kontrastsollwertbereichs, so wird ein Fehler ermittelt. Hinsichtlich der Form der Linie wird ein Vergleich der ermittelten Linienform mit einer vorgegebenen Linienform (sogenannter Mustervergleich) durchgeführt. Hierfür wird im Bild durch die Datenverarbeitungseinheit die Linie zunächst als hellster linienförmiger Abschnitt (bei einer hellen Linie) oder dunkelster linienförmiger Abschnitt (bei einer dunklen Linie) erkannt, ihre Form ermittelt sowie die angrenzenden hellen und dunklen Bereiche detektiert. Bei einer Abweichung der Linienform, die einen vorgegebenen Toleranzbereich überschreitet, wird ebenfalls ein Fehler erkannt. Beispielsweise kann die Oberfläche eine Richtungsänderung, eine Neigungsänderung oder eine Krümmungsänderung aufweisen, welche durch eine Abweichung in der Linienform in Bezug auf das Muster erkannt wird. In Bezug auf die Helligkeitsänderung (d.h. Gradient der Helligkeit) über eine vorgegebene Strecke des Hell-Dunkel-Übergangs wird ebenfalls ermittelt, ob die gemessene Helligkeitsänderung von einem Helligkeitsänderungssollwert oder einem Helligkeitsänderungssollwertbereich abweicht. Ist dies der Fall, so wird ein Fehler in der Oberfläche erkannt. Beispielsweise kann der Hell-Dunkel-Übergang im Bild im Bereich eines Fehlers weniger "scharf" sondern eher "verwaschen" erscheinen als in dem ursprünglichen Muster, was mittels des Helligkeitsgradienten dargestellt werden kann. Der Gradient in dem Bild der Kamera ist daher kleiner als bei dem Original-Muster.

Da die Position und die Blickrichtung der Kamera bekannt sind und somit auch eine Information darüber vorliegt, welcher Bereich der Bilddaten welchen lokalen Bereich der spiegelnden Oberfläche erfasst, kann bei der Detektion eines Fehlers beispielsweise mittels einer oder mehrerer der obigen Analysen der ermittelte Fehler einer Position der Oberfläche zugeordnet werden. Es können auch die Abmessungen des Fehlers ermittelt werden, indem durch die Datenverarbeitungseinheit festgestellt wird, über welchen Bereich der Oberfläche sich die Abweichungen von den Sollwerten oder Sollwertbereichen bzw. der Linienform erstrecken.

In einem Ausführungsbeispiel ist die Position des Musters in Bezug auf die Oberfläche unbekannt, d.h. nicht festgelegt. Dies bedeutet, dass auf eine Kalibrierung des Musters zur Kamera und zu der spiegelnden Oberfläche verzichtet wird. Die genaue Position des Musters ist für die vorliegende Aufgabenstellung nicht erforderlich, da keine Vermessung der spiegelnden Oberfläche sondern lediglich eine Bestimmung der Position und/oder Abmessung eines Fehlers auf der Oberfläche erfolgen soll. Als Fehler wird hierbei eine Abweichung von der gewünschten Oberflächenbeschaffenheit und/oder -struktur verstanden, die die optischen Eigenschaften der Oberfläche beeinträchtigt, insbesondere die Eigenschaften bei der Reflexion von elektromagnetischer Strahlung im sichtbaren Wellenlängenbereich. Die Fehler können beispielsweise Einschlüsse im Oberflächenbereich, Unebenheiten in der Oberfläche und dergl. umfassen. Um eine korrekte Auswertung der Eigenschaft des Hell-Dunkel-Übergangs durchzuführen, wird die Kamera auf einen mittleren Abstand der spiegelnden Oberfläche fokussiert. Weiter wird eine Blendeneinstellung der Kamera derart gewählt, dass die Linie des mindestens einen Hell-Dunkel-Übergangs so abgebildet wird, dass der Hell-Dunkel-Übergang detektierbar ist.

In einem Ausführungsbeispiel weist das Muster mindestens einen Streifen, der zwei Hell-Dunkel-Übergänge bildet, auf und die Datenverarbeitungseinheit wertet die Breite des mindestens einen Streifens zur Ermittlung von lokalen Fehlern auf der Oberfläche aus. Der mindestens eine Streifen kann als heller Streifen (Lichtstreifen) in Bezug auf eine dunkle Umgebung oder dunkler Streifen in Bezug auf eine helle Umgebung in dem Muster ausgebildet sein. In einem weiteren Ausführungsbeispiel kann das Muster als Streifenraster ausgebildet sein. Der mindestens eine Streifen dient lediglich zur Erzeugung von zwei Hell-Dunkel-Übergängen, stellt jedoch keine Kodierung in Bezug auf das Muster dar.

In einem Ausführungsbeispiel führen das Muster und/oder die Oberfläche während der Aufnahme des reflektierten Musters durch die Kamera eine Relativbewegung zueinander aus. Hierdurch kann ein - verglichen mit der Größe des Musters - große spiegelnde Oberfläche vermessen werden.

Die Aufgabe wird außerdem durch eine Vorrichtung zur Erkennung von lokalen Fehlern auf einer spiegelnden Oberfläche gelöst, welche mindestens ein Muster zur Reflexion an der spiegelnden Oberfläche erzeugen kann, und mindestens eine Kamera und eine Datenverarbeitungseinheit aufweist, wobei das Muster mindestens einen im Wesentlichen linienförmigen Hell-Dunkel-Übergang aufweist, wobei die Positionierung und Orientierung der Kamera bekannt sind, wobei die Kamera dazu eingerichtet ist, das auf der Oberfläche reflektierte Muster aufzunehmen und Bilddaten des reflektierten Musters zu erzeugen sowie an die Datenverarbeitungseinheit zu übermitteln, wobei die Datenverarbeitungseinheit dazu eingerichtet ist, lokale Fehler auf der Oberfläche basierend auf einer Auswertung mindestens einer Eigenschaft des mindestens einen Hell-Dunkel-Übergangs in den Bilddaten des reflektierten Musters zu ermitteln, wobei die mindestens eine Eigenschaft einen Kontrast in einem vorgegebenen Bereich des mindestens einen Hell-Dunkel-Übergangs in den Bilddaten umfasst. Die Vorrichtung bewirkt eine schnelle und wenig aufwändige Lokalisierung von Fehlern auf einer spiegelnden Oberfläche.

Die oben angegebenen Ausführungsbeispiele zu dem Muster sind auch für die obige Vorrichtung relevant. Es wird auf die obigen Erläuterungen hierzu verwiesen.

In einem Ausführungsbeispiel der Vorrichtung weist das Muster mindestens einen Streifen, der zwei im Wesentlichen linienförmige Hell-Dunkel-Übergänge bildet, auf und die Datenverarbeitungseinheit ist dazu eingerichtet, die Breite des mindestens einen Streifens zur Ermittlung von lokalen Fehlern auf der Oberfläche auszuwerten. Wie oben bereits erläutert wurde, beinhaltet die Verwendung von hellen Streifen (Lichtstreifen) oder dunklen Streifen und die Auswertung der Streifenbreite in den Bilddaten zur Lokalisierung von Fehlern eine sehr einfache Ausführungsform der vorliegenden Erfindung.

In einem Ausführungsbeispiel der Vorrichtung sind das Muster und/oder die Oberfläche derart eingerichtet, dass sie während der Aufnahme des reflektierten Musters durch die Kamera eine Relativbewegung zueinander ausführen, um eine große Oberfläche zu analysieren.

Das obige Verfahren kann z. B. als Computerprogramm realisiert werden, das Anweisungen umfasst, die bei ihrer Ausführung einen Prozessor der Datenverarbeitungseinheit veranlassen, die Schritte des obigen Verfahrens auszuführen, wobei das Computerprogramm eine Kombination der oben beschriebenen Schritte und Datendefinitionen beinhaltet, welche die Computer-Hardware in die Lage versetzen, Rechen- oder Steuerfunktionen auszuführen, und/oder das eine syntaktische Einheit darstellt, die den Regeln einer bestimmten Programmiersprache entspricht und die aus Deklarationen und Anweisungen oder Instruktionen besteht, die für die oben erläuterten Funktionen, Aufgaben oder Problemlösungen benötigt werden.

Weiterhin wird ein Computerprogrammprodukt offenbart, umfassend Befehle, welche - wie oben dargestellt - bewirken, dass die obige Vorrichtung die Schritte des oben definierten Verfahrens durchführt. Entsprechend wird ein computerlesbarer Datenträger offenbart, der ein solches Computerprogrammprodukt speichert. Das Computerprogrammprodukt kann eine Software-Routine sein.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

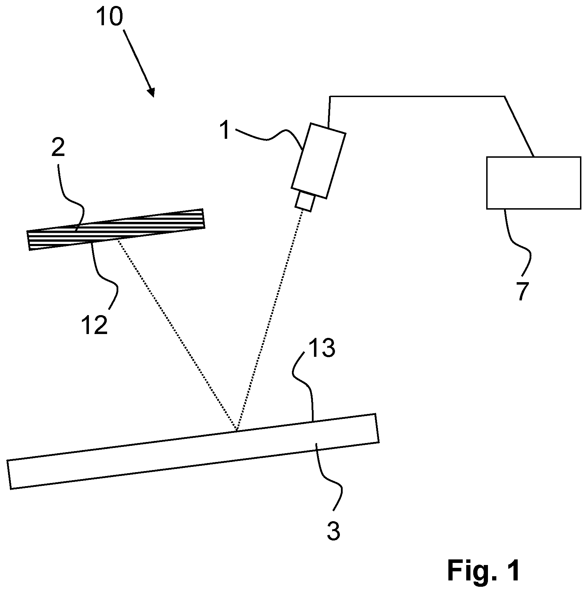

Es zeigt schematisch
- Fig. 1: ein Ausführungsbeispiel einer erfindungsgemäßen Vorrichtung zur Formmessung einer spiegelnden Oberfläche.

In Fig. 1 ist der grundsätzliche Aufbau einer Vorrichtung 10 zur Erkennung von Fehlern in einer spiegelnden Oberfläche 13 eines zu vermessenden Objekts 3 dargestellt. Die Vorrichtung 10 weist eine Kamera 1 auf, welche über die spiegelnde Oberfläche 13 das Muster 12 eines Musterträgers 2 betrachtet. Um Fehler in der spiegelnden Oberfläche 13 des Objekts 3 bestimmen zu können, wird ein Koordinatensystem der Kamera 1 mittels einer bekannten Kamera-Kalibriermethode bestimmt. Beispielsweise kann ein Kamera-Kalibrierverfahren verwendet werden, das ein planares Muster in mindestens zwei verschiedenen Orientierungen beobachtet und das in Zhang, Z., "A flexible new technique for camera calibration", IEEE Transactions on Pattern Analysis and Machine Intelligence, vol. 22, Nr. 11, 2000, Seiten 1330-1334 beschrieben ist. Weitere Kamera-Kalibrierverfahren sind beispielsweise in Fraser, Clive S., "Digital camera self-calibration", ISPRS Journal of Photogrammetry and Remote Sensing, Nr. 52(4),1997, Seiten 149-159 beschrieben.

Die Digitalkamera 1 ist zur pixelweisen Betrachtung des auf der reflektierenden Oberfläche 13 reflektierten 2-dimensionalen Musters 12 eingerichtet.

Die Ausprägung des Musters 12 kann verschieden sein. Dazu ist als Musterträger 2 ein Flachbildschirm, bspw. ein TFT-Bildschirm, vorgesehen, auf dem beliebige Muster 12 darstellbar sind. Aufgrund der bekannten Pixelmaße des Flachbildschirms 2 ist damit auch die Geometrie des dargestellten Musters 12 genau bekannt. Es sind jedoch auch andere Realisierungen für einen Musterträger 2, bspw. austauschbare Platten mit einem vermessenen Muster in einem Halter, denkbar. Das Muster 12 können beispielsweise zwei helle Streifen mit einer Breite B1 und einer Breite B2 auf einem dunklen Untergrund bilden, die einen Abstand aufweisen, der größer als die Breite B1, B2 der beiden Streifen ist. Hierbei können B1 und B2 gleich oder unterschiedlich sein. Der Abstand der beiden Streifen ist hierbei die Entfernung zweier benachbarter Hell-Dunkel-Übergänge der benachbarten Streifen. Jeder Streifen weist zwei Hell-Dunkel-Übergänge auf, und zwar einen ersten Hell-Dunkel-Übergang vom Bereich geringer Helligkeit in einen Bereich großer Helligkeit und einen zweiten Hell-Dunkel-Übergang vom Bereich großer Helligkeit in den Bereich geringer Helligkeit.

In der Praxis handelt es sich bei den auf Oberflächenfehler zu untersuchenden Objekten beispielsweise um eine Windschutzscheibe eines Kraftfahrzeugs. Die spiegelnde Oberfläche ist die äußere Oberfläche 13 der Windschutzscheibe 3.

Die Kamera 1 nimmt ein Bild des Streifenmusters auf und übermittelt die erzeugten digitalen Daten zur Datenverarbeitungseinheit 7.

Die Erkennung von Fehlern auf der Oberfläche 13 erfolgt mittels eines in der Datenverarbeitungseinheit 7 enthaltenen Prozessors basierend auf den von der Kamera 1 übermittelten Daten mit dem an der Oberfläche 13 reflektierten Bild der Hell-Dunkel-Übergänge des Musters. Hierfür wird für jeden Pixel der Kamera, der einem Punkt des Bildes entspricht, die Helligkeit und/oder ein Farb- oder Grauwert ausgewertet, welche die Datenverarbeitungseinheit 7 von der Kamera 1 erhalten hat. Hierfür werden zunächst die Linien der Übergänge gesucht, was mittels Schwellwertoperationen erfolgt. Wenn bei einem Übergang die Linie der hellste Bereich ist, wird davon ausgegangen, dass im Bild nur die Stellen, wo die Linie sichtbar ist, hell erscheinen. Entsprechend ist eine solche Schwellwertoperation natürlich auch an einer dunklen Linie möglich. Aus den gefundenen Intensitätsmaxima wird die Linie und ihre Umgebung extrahiert, diese Umgebung ist ein gekrümmter Streifen mit einer gewissen Ausdehnung von hellen/dunklen Bereichen senkrecht zur Linie, der dem Verlauf der gespiegelten Linie folgt. Auf diesem Streifen werden dann die nachfolgenden Berechnungen, wie die Bestimmung des lokalen Kontrasts und die Bestimmung der lokalen Form der Linie und ihrer Breite durchgeführt. Anschließend wird festgestellt, ob der Verlauf der Linien Änderungen gegenüber dem Verlauf des Musters 12 aufweist, beispielsweise Richtungsänderungen. Alternativ oder zusätzlich kann die Breite der Streifen, die sich in den Bereichen mit großer Helligkeit zwischen benachbarten linienförmigen Hell-Dunkel-Übergängen erstrecken, ermittelt werden. Falls sich Abweichungen von dem Muster 12 in den Hell-Dunkel-Übergängen ergeben, erkennt die Datenverarbeitungseinheit einen Fehler in der Oberfläche 13 der Windschutzscheibe 3. Die Datenverarbeitungseinheit 7 kann den Fehler zudem einer bestimmten Position auf der Oberfläche 13 der Windschutzscheibe 3 zuordnen, da die Kamera 1 hinsichtlich Lage und Blickrichtung kalibriert ist. Auch die Ausdehnung/Abmessung des Fehlers kann basierend auf der Ausdehnung des Bereichs in dem von der Kamera 1 aufgenommenen Bild bestimmt werden, in dem eine Veränderung des jeweiligen Hell-Dunkel-Übergangs ermittelt und der mit den entsprechenden Positionen des Bereichs auf der Oberfläche 13 verknüpft wird.

Die obigen Schritte sind einfach zu realisieren und bewirken eine hohe Inspektionsgeschwindigkeit. Es werden Fehlerpositionen und -ausdehnungen ermittelt. Die Datenverarbeitungseinheit kann die ermittelten Fehler und ihre Abmessungen in einer Speichereinheit speichern und/oder auf einem Display anzeigen.

### Bezugszeichenliste

- 1: Kamera
- 2: Musterträger, Flachbildschirm
- 3: Windschutzscheibe
- 7: Datenverarbeitungseinheit
- 10: Vorrichtung
- 12: Muster
- 13: spiegelnde Oberfläche der Windschutzscheibe 3

## Patentansprüche

1. Verfahren zur Erkennung von lokalen Fehlern auf einer spiegelnden Oberfläche (13) mittels einer Vorrichtung (10), welche mindestens ein Muster (12) zur Reflexion an der spiegelnden Oberfläche erzeugen kann, und mindestens eine Kamera (1) und eine Datenverarbeitungseinheit (7) aufweist, wobei das Muster mindestens einen, im Wesentlichen linienförmigen Hell-Dunkel-Übergang aufweist, wobei die Positionierung und Orientierung der Kamera bekannt sind, wobei die Kamera das auf der Oberfläche reflektierte Muster aufnimmt und Bilddaten des reflektierten Musters erzeugt, welche von der Kamera an die Datenverarbeitungseinheit übermittelt werden, wobei die Datenverarbeitungseinheit lokale Fehler auf der Oberfläche basierend auf einer Auswertung mindestens einer Eigenschaft des mindestens einen Hell-Dunkel-Übergangs in den Bilddaten des reflektierten Musters ermittelt, **dadurch gekennzeichnet, dass** die mindestens eine Eigenschaft einen Kontrast in einem vorgegebenen Bereich des mindestens einen Hell-Dunkel-Übergangs in den Bilddaten umfasst.

2. Verfahren nach Anspruch 1, **dadurch gekennzeichnet, dass** weitere Eigenschaften des mindestens einen Hell-Dunkel-Übergangs in den Bilddaten eine Form des mindestens einen Hell-Dunkel-Übergangs in den Bilddaten und/oder eine Helligkeitsänderung über eine vorgegebene Strecke über den mindestens einen Hell-Dunkel-Übergang in den Bilddaten umfassen.

3. Verfahren nach einem der vorhergehenden Ansprüche, **dadurch gekennzeichnet, dass** die Position des Musters in Bezug auf die Oberfläche unbekannt ist.

4. Verfahren nach einem der vorhergehenden Ansprüche, **dadurch gekennzeichnet, dass** das Muster mindestens einen Streifen, der zwei Hell-Dunkel-Übergänge bildet, aufweist und die Datenverarbeitungseinheit die Breite des mindestens einen Streifens zur Ermittlung von lokalen Fehlern auf der Oberfläche auswertet.

5. Verfahren nach einem der vorhergehenden Ansprüche, **dadurch gekennzeichnet, dass** das Muster und/oder die Oberfläche während der Aufnahme des reflektierten Musters durch die Kamera eine Relativbewegung zueinander ausführen.

6. Vorrichtung (10) zur Erkennung von lokalen Fehlern auf einer spiegelnden Oberfläche (13), welche mindestens ein Muster (12) zur Reflexion an der spiegelnden Oberfläche erzeugen kann, und mindestens eine Kamera (1) und eine Datenverarbeitungseinheit (7) aufweist, wobei das Muster mindestens einen im Wesentlichen linienförmigen Hell-Dunkel-Übergang aufweist, wobei die Positionierung und Orientierung der Kamera bekannt sind, wobei die Kamera dazu eingerichtet ist, das auf der Oberfläche reflektierte Muster aufzunehmen und Bilddaten des reflektierten Musters zu erzeugen sowie an die Datenverarbeitungseinheit zu übermitteln, wobei die Datenverarbeitungseinheit dazu eingerichtet ist, lokale Fehler auf der Oberfläche basierend auf einer Auswertung mindestens einer Eigenschaft des mindestens einen Hell-Dunkel-Übergangs in den Bilddaten des reflektierten Musters zu ermitteln, **dadurch gekennzeichnet, dass** die mindestens eine Eigenschaft einen Kontrast in einem vorgegebenen Bereich des mindestens einen Hell-Dunkel-Übergangs in den Bilddaten umfasst.

7. Vorrichtung nach Anspruch 6, **dadurch gekennzeichnet, dass** weitere Eigenschaften des mindestens einen Hell-Dunkel-Übergangs in den Bilddaten eine Form des mindestens einen Hell-Dunkel-Übergangs in den Bilddaten und/oder eine Helligkeitsänderung über eine vorgegebene Strecke über den mindestens einen Hell-Dunkel-Übergang in den Bilddaten umfasst.

8. Vorrichtung nach einem der Ansprüche 6 bis 7, **dadurch gekennzeichnet, dass** die Position des Musters in Bezug auf die Oberfläche unbekannt ist.

9. Vorrichtung nach einem der Ansprüche 6 bis 8, **dadurch gekennzeichnet, dass** das Muster mindestens einen Streifen, der zwei im Wesentlichen linienförmige Hell-Dunkel-Übergänge bildet, aufweist und die Datenverarbeitungseinheit dazu eingerichtet ist, die Breite des mindestens einen Streifens zur Ermittlung von lokalen Fehlern auf der Oberfläche auszuwerten.

10. Vorrichtung nach einem der Ansprüche 6 bis 9, **dadurch gekennzeichnet, dass** das Muster und/oder die Oberfläche derart eingerichtet sind, dass sie während der Aufnahme des reflektierten Musters durch die Kamera eine Relativbewegung zueinander ausführen.

11. Computerprogrammprodukt, umfassend Befehle, welche bewirken, dass die Vorrichtung der Ansprüche 6 bis 10 die entsprechenden Schritte des Verfahrens gemäß einem der Ansprüche 1 bis 5 durchführt.

12. Computerlesbarer Datenträger, der ein Computerprogrammprodukt gemäß Anspruch 11 speichert.

## Claims

1. A method for detecting local defects on a reflective surface (13) by means of a device (10), wherein the device can produce at least one pattern (12) for reflection on the reflective surface and comprises at least one camera (1) and a data processing unit (7), wherein the pattern comprises at least one substantially line-shaped light-dark transition, the positioning and orientation of the camera being known, wherein the camera records the pattern reflected on the surface and generates image data of the reflected pattern which is transmitted from the camera to the data processing unit, wherein the data processing unit determines local defects on the surface based on an evaluation of at least one property of the at least one light-dark transition in the image data of the reflected pattern, **characterized in that** the at least one property comprises a contrast in a predetermined area of the at least one light-dark transition in the image data.

2. The method according to claim 1, **characterized in that** further properties of the at least one light-dark transition in the image data comprise a shape of the at least one light-dark transition in the image data and/or a change in brightness over a predetermined distance across the at least one light-dark transition in the image data.

3. The method according to any one of the preceding claims, **characterized in that** the position of the pattern with respect to the surface is unknown.

4. The method according to any one of the preceding claims, **characterized in that** the pattern comprises at least one stripe forming two light-dark transitions and the data processing unit evaluates the width of the at least one stripe to determine local defects on the surface.

5. The method according to any one of the preceding claims, **characterized in that** the pattern and/or the surface perform a relative movement with respect to each other during the recording of the reflected pattern by the camera.

6. A device (10) for detecting local defects on a reflective surface (13), wherein the device can produce at least one pattern (12) for reflection on the reflective surface and comprises at least one camera (1) and a data processing unit (7), wherein the pattern comprises at least one essentially line-shaped light-dark transition, wherein the positioning and orientation of the camera are known, wherein the camera is configured to record the pattern reflected on the surface, to record the pattern reflected on the surface and to generate image data of the reflected pattern and to transmit them to the data processing unit, wherein the data processing unit is configured to determine local defects on the surface based on an evaluation of at least one property of the at least one light-dark transition in the image data of the reflected pattern, **characterized in that** the at least one property comprises a contrast in a predetermined area of the at least one light-dark transition in the image data.

7. The device according to claim 6, **characterized in that** further properties of the at least one light-dark transition in the image data comprise a shape of the at least one light-dark transition in the image data and/or a change in brightness over a predetermined distance across the at least one light-dark transition in the image data.

8. The device according to any one of claims 6 to 7, **characterized in that** the position of the pattern with respect to the surface is unknown.

9. The device according to any one of claims 6 to 8, **characterized in that** the pattern comprises at least one stripe forming two substantially line-shaped light-dark transitions, and the data processing unit is configured to evaluate the width of the at least one stripe to determine local defects on the surface.

10. The device according to any one of claims 6 to 9, **characterized in that** the pattern and/or the surface are configured such that they perform a relative movement with respect to each other during the recording of the reflected pattern by the camera.

11. A computer program product comprising instructions effecting that the device of any one of the claims 6 to 10 performs the corresponding steps of the method according to any one of claims 1 to 5.

12. A computer readable medium storing the computer program product according to claim 11.

## Revendications

1. Procédé de détection d'erreurs locales sur une surface spéculaire (13) au moyen d'un dispositif (10), qui peut générer au moins un motif (12) de réflexion sur la surface spéculaire et présente au moins une caméra (1) et une unité de traitement de données (7), dans lequel le motif présente au moins une transition clair-obscur sensiblement linéaire, dans lequel le positionnement et l'orientation de la caméra sont connus, dans lequel la caméra enregistre le motif réfléchi sur la surface et génère des données d'image du motif réfléchi qui sont transmises par la caméra à l'unité de traitement de données, dans lequel l'unité de traitement de données détermine des erreurs locales sur la surface sur la base d'une évaluation d'au moins une propriété de l'au moins une transition clair-obscur dans les données d'image du motif réfléchi, **caractérisé en ce que** l'au moins une propriété comprend un contraste dans une plage prédéfinie de l'au moins une transition clair-obscur dans les données d'image.

2. Procédé selon la revendication 1, **caractérisé en ce que** d'autres propriétés de l'au moins une transition clair-obscur dans les données d'image comprennent une forme de l'au moins une transition clair-obscur dans les données d'image et/ou une modification de luminosité sur une distance prédéfinie sur l'au moins une transition clair-obscur dans les données d'image.

3. Procédé selon l'une quelconque des revendications précédentes, **caractérisé en ce que** la position du motif par rapport à la surface est inconnue.

4. Procédé selon l'une quelconque des revendications précédentes, **caractérisé en ce que** le motif présente au moins une bande qui forme deux transitions clair-obscur et l'unité de traitement de données évalue la largeur de l'au moins une bande pour déterminer des erreurs locales sur la surface.

5. Procédé selon l'une quelconque des revendications précédentes, **caractérisé en ce que** le motif et/ou la surface exécutent un mouvement relatif l'un par rapport à l'autre pendant l'enregistrement du motif réfléchi par la caméra.

6. Dispositif (10) de détection d'erreurs locales sur une surface spéculaire (13), qui peut générer au moins un motif (12) de réflexion sur la surface spéculaire et présente au moins une caméra (1) et une unité de traitement de données (7), dans lequel le motif présente au moins une transition clair-obscur sensiblement linéaire, dans lequel le positionnement et l'orientation de la caméra sont connus, dans lequel la caméra est mise au point pour enregistrer le motif réfléchi sur la surface et générer des données d'image du motif réfléchi et les transmettre à l'unité de traitement de données, dans lequel l'unité de traitement de données est mise au point pour déterminer des erreurs locales sur la surface sur la base d'une évaluation d'au moins une propriété de l'au moins une transition clair-obscur dans les données d'image du motif réfléchi, **caractérisé en ce que** l'au moins une propriété comprend un contraste dans une plage prédéfinie de l'au moins une transition clair-obscur dans les données d'image.

7. Dispositif selon la revendication 6, **caractérisé en ce que** d'autres propriétés de l'au moins une transition clair-obscur dans les données d'image comprennent une forme de l'au moins une transition clair-obscur dans les données d'image et/ou une modification de luminosité sur une distance prédéfinie sur l'au moins une transition clair-obscur dans les données d'image.

8. Dispositif selon l'une quelconque des revendications 6 à 7, **caractérisé en ce que** la position du modèle par rapport à la surface est inconnue.

9. Dispositif selon l'une quelconque des revendications 6 à 8, **caractérisé en ce que** le motif présente au moins une bande qui forme deux transitions clair-obscur sensiblement linéaires et l'unité de traitement de données est mise au point pour évaluer la largeur de l'au moins une bande pour déterminer des erreurs locales sur la surface.

10. Dispositif selon l'une quelconque des revendications 6 à 9, **caractérisé en ce que** le motif et/ou la surface sont mis au point de manière à exécuter un mouvement relatif l'un par rapport à l'autre pendant l'enregistrement du motif réfléchi par la caméra.

11. Produit de programme d'ordinateur comprenant des instructions, qui entraînent la mise en œuvre par le dispositif selon les revendications 6 à 10 des étapes correspondantes du procédé selon l'une quelconque des revendications 1 à 5.

12. Support de données lisible par ordinateur, qui stocke un produit de programme d'ordinateur selon la revendication 11.
